# EUROPEAN PATENT APPLICATION

(11) **EP 1 968 061 A1**
(43) Date of publication of application: **10.09.2008**
(21) Application number: 06843295.4
(22) Date of filing: 26.12.2006
(51) Int. Cl.: G11B 20/10, G06F 21/24, H04N 5/91

(54) **CONTENT DATA RECORDING/REPRODUCING DEVICE**

(30) Priority: 28.12.2005 JP 2005379304
(71) Applicant: MATSUSHITA ELECTRIC INDUSTRIAL CO., LTD., Osaka 571-8501 (JP)
(72) Inventor: WATABE, Akihiro, c/o Matsushita El. Ind. Co., Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/325911
(87) International publication number: WO 2007/074819

(57) **Abstract**

Even in the case of copying contents data on a recording medium not compliant with copyright protection, in order to enable the data to be moved to a recording medium compliant with copyright protection, key data to encrypt the contents data is generated per contents data and held in a contents encrypting key memory section **106** in the recording/reproducing device. The contents data is encrypted by the key data in a contents encrypting section **103,** while at the same time the key data is encrypted in a key encrypting section **107,** both data being recorded together on the HDD **111** not complying with copyright protection. When the contents data is moved to a DVD-RAM **112** of the copyright protection non-compliant recording medium, the key data held in the contents encrypting key memory section **106** is deleted and the contents data cannot be reproduced even by the HDD-DVD recorder **102.**

## Description

### BACKGROUND OF THE INVENTION

### TECHNICAL FIELD

The present invention relates to a content data recording/reproducing device recording and reproducing contents data which requires copyright protection such as musical contents.

### BACKGROUND ART

In recent years, use of musical contents through digital contents data has spread, resulting in increased importance of copyright protection to prevent illegal copying. Hence, for example, there is used a technique by using what is called a usual, copyright protection non-compliant recording medium and providing the contents data to be recorded with information on restricted usage whereby backup copies can be freely made, while reproduction cannot be made in equipment other than a specified reproducing device corresponding to the information on restricted usage (e.g., see Patent Document 1).

On the other hand, there is employed another technique whereby what is called a copyright protection compliant recording medium is used with identification data of the recording medium embedded in the contents data, so that the contents data of that recording medium can be reproduced on any devices, whereas contents data copied onto other recording media cannot be reproduced. Furthermore, there is known a technique (e.g., see Patent Document 2) whereby a move of contents data is made possible by copying onto other recording medium the contents data recorded on the copyright protection compliant recording medium, while part of the identification information of the original recording medium is incremented to invalidate the contents data recorded on the original medium to make it impossible to be reproduced.
[Patent Document 1] Japanese Unexamined Patent Application Publication No. 2002-150676
[Patent Document 2] Japanese Unexamined Patent Application Publication No. 2001-184313

### DISCLOSURE OF THE INVENTION

### Problems that the Invention is to Solve

However, it is not possible to simultaneously apply the technique of restricting a reproducing device capable of reproducing the contents data as mentioned above so that a copy can be made onto the copyright protection non-compliant recording medium and the technique of invalidating the contents data recorded on the copyright protection compliant recording medium to enable a move. That is, when the contents data copied by using the former technique is made moveable to other recording medium by using the latter technique, it means that the assumption of invalidating the original contents data by the latter technique has not been observed. This is because making a plurality of copies is not especially restricted in the former technique, so that unless all copies are invalidated, invalidation itself has not been accomplished in actuality. Therefore, moving the contents data once copied on the copyright protection non-compliant recording medium cannot possibly be carried out onto the copyright protection compliant recording medium, thus leaving a problem of not being able to drastically enhance usability.

The present invention has been made in view of such circumstances. It is the object of the present invention to make it possible, even in the case where the contents data is copied on the copyright protection non-compliant recording medium, to move such data to the copyright protection compliant recording medium so as to be made reproducible on a reproducing device which is not restricted by any specified device.

To solve the problems, a content data recording/reproducing reproducing device performing recording and reproduction of contents data according to the present invention includes:
a recording section and a reading section recording or reading contents data with respect to a recording medium;
a determining section determining whether the recording medium is a copyright protection compliant recording medium in which handling of contents data complying with conditions of copyright protection is guaranteed or a copyright protection non-compliant recording medium having no such guarantee;
a reproduction control information management section which, when the contents data is to be recorded on the copyright protection non-compliant recording medium, generates and holds reproduction control information necessary for reproducing such contents data; and
a copyright protection management section which performs processing according to the conditions of copyright protection when the contents data is to be recorded on the copyright protection compliant recording medium,
wherein the reproduction control information management section is configured to delete the reproduction control information held when after the contents data is recorded on the copyright protection non-compliant recording medium, it is to be recorded on the copyright protection compliant recording medium.

This allows the reproduction control information necessary for reproducing the contents data to be generated when the contents data is recorded on the copyright protection non-compliant recording medium (non-compliant recording medium) and held by the content data recording/reproducing device. The information is deleted when the contents data recorded on the non-compliant recording medium is recorded on the copyright protection compliant recording medium (compliant recording medium). That is, even if the contents data originally recorded on the non-compliant recording medium is not actually deleted (in other words, even when the contents data is difficult to entirely delete because the data is copied to a plurality of non-complying recording media), it can be secured that the data is not reproduced. Consequently, it is possible to move the contents data from the non-compliant recording medium to the compliant recording medium while guaranteeing copyright protection.

At this point, as reproduction control information necessary for the reproduction, for example, a key to decrypt encrypted contents data is put to use and stored in a region where reading from outside the content data recording/reproducing device is restricted and the like. Further, as an encrypting method of the contents data, a method using the same key data as encrypting and decrypting may be applied.

Further, when the contents data is duplicated between the non-complying recording media, when it is so adapted that the same reproduction control information may be used, then an arrangement can be made where the contents data recorded by either recording medium cannot be reproduced by deleting the reproduction control information. It should be noted that when duplicating between the non-complying recording media, for example, processing such as bit rate conversion may be adapted to be made.

Still further, it may be arranged such that the reproduction control information may be made moveable between content data recording/reproducing devices so as to be able to make a change of a reproducible content data recording/reproducing device.

### Effects of the Invention

According to the present invention, even when contents data is copied on the copyright protection non-compliant recording medium, it may be so arranged that the data is moved to a copyright protection compliant recording medium to make it reproducible on a reproducing device not restricted to any specific device.

### BRIEF DESCRIPTION OF THE DRAWINGS

Fig. **1** is a block diagram showing a configuration of a principal part of an HDD-DVD recorder **102** of an embodiment of the present invention.
Fig. **2** is a flowchart showing recording operation to an HDD **111** of an embodiment of the present invention.
Fig. **3** is a flowchart showing reproducing operation from the HDD **111** of an embodiment of the present invention.
Fig. **4** is a flowchart showing moving operation of contents data from the HDD **111** to the DVD-RAM **112** and the like of an embodiment of the present invention.
Fig. **5** is a flowchart showing re-encode dubbing operation from the HDD 111 to the HDD **111** of an embodiment of the present invention.
Fig. **6** is a block diagram showing equipment connection when changing a reproducible device of an embodiment of the present invention.
Fig. **7** is a flowchart showing change operation of a reproducible device of an embodiment of the present invention.

### Reference Numeral

- **102**: HDD-DVD recorder
- **102'**: HDD-DVD recorder
- **103**: Contents encrypting section
- **104**: Random number generator
- **105**: Contents encrypting key generator
- **106**: Contents encrypting key memory section
- **107**: Key encrypting section
- **108**: Decrypting section
- **109**: Copyright information control section
- **110**: Media interface section
- **111**: HDD
- **112**: DVD-RAM
- **113**: DVD-R
- **114**: Key exchange interface section
- **114'**: Key exchange interface section
- **115**: Serial number memory section
- **116**: DVD drive

### BEST MODE FOR CARRYING OUT THE INVENTION

Referring to the drawings, the embodiments of the present invention will be described in detail.

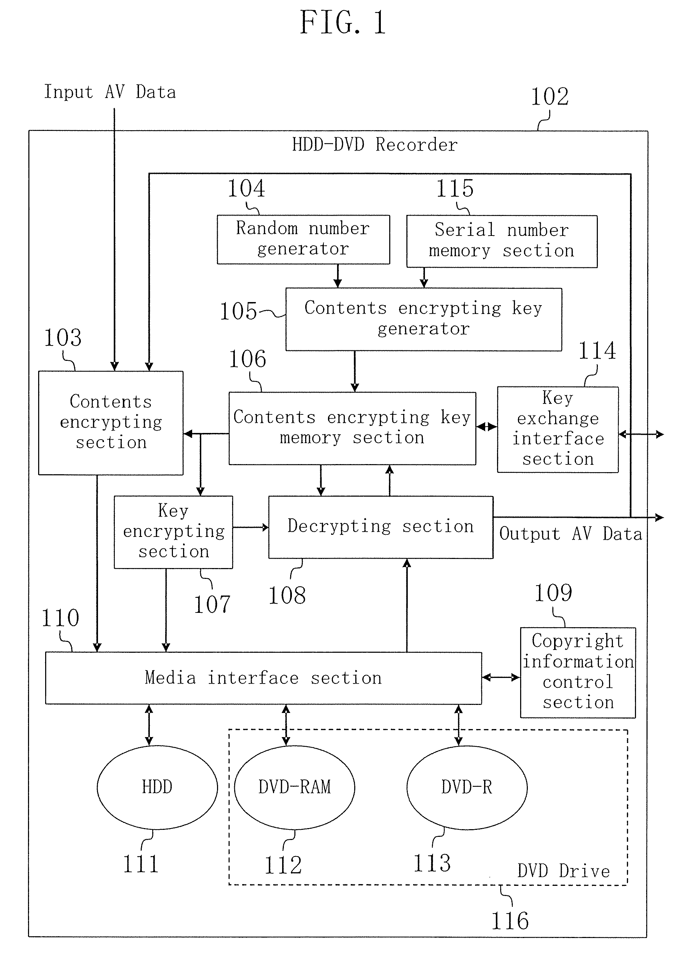

Fig. **1** is a block diagram showing a configuration of a principal part of an HDD-DVD recorder **102** as an example of a content data recording/reproducing device. In this drawing, a random number generator **104** generates random numbers and outputs data which is hard to predict externally by, for example, a built-in timer.

A serial number memory section **115** functions to memorize an ID (identification information) which is unique to each equipment, and it is desirable for this section to memorize a different value for each recording/reproducing device. However, the ID is not necessarily a unique number. A low probability of corresponding to the IDs of other devices is sufficient.

A contents encrypting key generator **105** functions to generate key data (key) for encrypting upon every recording of the contents data based on information from the random number generator **104** and the serial number memory section **115.** What is important here is that since the equipment ID and the random number are used for generating the key data, there is an extremely small possibility that key data generated by another equipment coincides by chance, and that different key data is obtained whenever the key data is generated by the same equipment. It should be noted that a method of acquiring the key data is not confined to the foregoing. Any method is acceptable insofar as there is a low probability from the practical standpoint of producing the same key data in regard to recording on another equipment and recording of different contents data. Further, in this embodiment, there is provided an example of an encrypting method in which the same key data is used for encrypting and decrypting. Nevertheless, there may be an encrypting method in which mutually different key data are used. Instead of what is called encrypting, encoding, conversion, or the like which need reproduction control information such as key data for reproduction may be used.

A contents encrypting key memory section **106** is for holding a list of generated key data. This contents encrypting key memory section **106** is provided in, for example, a region in which reading from outside the device is restricted.

A contents encrypting section **103** operates to encrypt inputted AV data (contents data) by using key data held in the contents encrypting key memory section **106** and outputs encrypted contents data. This encrypted contents data cannot be decrypted unless the key data stored in the contents encrypting key memory section **106** is used. The contents encrypting section **103** also functions to encrypt and encode in compliance with the copyright protection system.

A key encrypting section **107** operates to encrypt the key data itself by using, for example, a unique device key, a serial number, and an algorithm. The encrypted key data which was encrypted is recorded, together with the encrypted contents data, on the recording medium. The encrypted key data is for authentication (verifying) of the key data to be described later and not necessarily what can be decrypted uniquely. Further, the decrypting may not necessarily be possible by this HDD-DVD recorder **102.** That is, insofar as the same encrypting (conversion) result can be obtained for the same key data, conversion by, for example, a one-way function is possible, where it is difficult or impossible to get the original key data from the encrypted key data.

A decrypting section **108** functions to decrypt the encrypted contents data read from the recording medium (medium) with the use of the key data stored in the contents encrypting key memory section **106** and outputs it as output **AV** data and the like. This decrypting section **108** also has functions, to be mentioned later, to collate the encrypted key data, which results from encrypting by the key encrypting section **107** of the key data held by the contents encrypting key memory section **106,** to the encrypted key data read by the recording medium, and to select, according to the collating results, the key data to be used for decrypting the encrypted contents data as well as the key data to be deleted by the key exchange interface section **114.**

A media interface section **110** operates to control an HDD **111** (hard disk drive) and a DVD drive **116,** and to record and read the contents data in regard to the HDD **111** or a recording medium such as a DVD-RAM **112** or a DVD-R **113** loaded on the DVD drive **116.** At this point, in the following explanation, for example, the HDD **111,** regarding recording and reproducing the contents data, is particularly explained as a copyright protection non-compliant recording medium free from any restraint on copyright protection, and that the DVD-RAM **112** and the DVD-R **113** are explained as copyright protection compliant recording media which guarantee contents data processing according to the conditions of copyright protection.

A copyright information control section **109** is a part which performs processing in compliance with the copyright protection system with respect to the copyright protection compliant recording media such as the DVD-RAM **112.** There is no particular restriction on the copyright protection system. Various systems are applicable including one that performs encrypting and encoding with the use of identification information of the recording medium thereby disabling reproduction of the encrypted contents data copied on another recording medium, and one that embeds, in the contents data, information indicating the number of times of copies made so as to limit the number of times of copying.

A key exchange interface section **114** functions to exchange the key data with other HDD-DVD recorders and the like. To be more specific, when outputting (moving to another equipment) the key data from the contents encrypting key memory section **106,** the key data is deleted from the contents encrypting memory section, and when new key data is inputted (moved) from outside (another equipment), the key data is held in the contents encrypting key memory section **106.** That is, the same processing as the existing copyright protection system and the like will be provided to the key data itself.

Operation when recording and reproduction of various recording media are carried out by the HDD-DVD recorder **102** of the foregoing configuration will be described.

### (1) Recording Input AV Data to the Copyright Protection Non-Compliant Recording Medium (HDD 111)

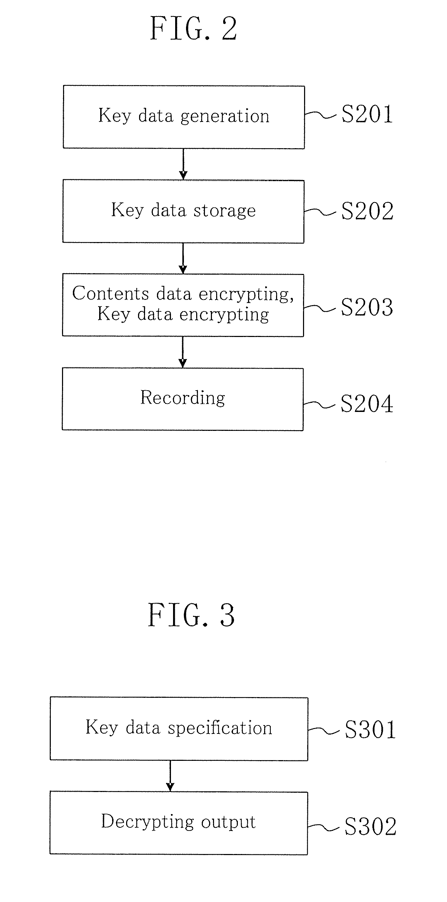

Explanation will be made based on the flowchart in Fig. **2****.**

(**S201**) For example, when recording on the HDD **111** input **AV** data as contents data by broadcast and the like, whose recording frequency is limited to one time and the like, then first, the contents encrypting key generator **105** generates key data based on data of the random number generator **104** and the serial number memory section **115.** As regards to this key data, unless an identical serial number memory section **115** and an identical random number are used, there is a very low possibility of generating the same key data. In other words, duplication of this key data is difficult.

(**S202**) The contents encrypting key memory section **106** memorizes the generated key data.

(**S203**) The contents encrypting section **103** encrypts the contents data using the key data. The key encrypting section **107** encrypts the key data.

(**204**) The media interface section **110** writes the encrypted contents data together with the corresponding encrypted key data on the HDD **111.** As explained later, the encrypted key data is used, when decrypting the encrypted contents data, to specify the key data used for the decrypting (i.e., key data used for encrypting). Further, the encrypted key data is used to authenticate that the recording/reproducing device is a device authorized to reproduce the contents data.

It should be noted that for authentication of the recording/reproducing device, instead of writing the encrypted key data as mentioned above, a serial number unique to the device may be arranged to be written. Further, in this case, to specify the key data to be used for decrypting, an index number of the key data and the like may be written while eliminating the need for encrypting the key data or writing the encrypted key data.

### (2) Reproduction of the Contents Data from the Copyright Protection Non-Compliant Recording Medium (HDD111)

Explanation will be made referring to the flowchart in Fig. **3****.**

(**S301**) As mentioned above, when decrypting and reproducing the encrypted contents data recorded on the HDD **111,** first, the key data for decrypting is specified. Specifically, the media interface section **110** reads the encrypted key data recorded on the HDD **111** in correspondence with the encrypted contents data. On the other hand, the key encrypting section **107** successively encrypts the key data held by the contents encrypting key memory section **106,** while the decrypting section **108** compares each key data encrypted by the key encrypting section **107** with the encrypted key data read from the HDD **111.** Then, when there is a match of data, the key data used when recording the encrypted contents data (hence to be used for decrypting) is specified. Further, by confirming that the data is held by the contents encrypting key memory section **106,** an authentication is made such that the HDD-DVD recorder **102** is an authorized recording/reproducing device.

For a key data encrypting system, when a system capable of decrypting the encrypted key data is used, the encrypted key data read from the HDD **111** may be decrypted to be compared to the key data stored in the contents encrypting key memory section **106.** However, encrypting the key data held in the contents encrypting key memory section **106** followed by a comparison can employ an encrypting system which makes decrypting substantially impossible, such as one using a one-way function, thus enabling confidentiality of the key data to be easily enhanced.

At this point, when the one-way function is used, even if the original key data are different, the possibility of a match of encrypted key data is not entirely nil. When this possibility is taken into consideration, decrypting by the specified key data is carried out followed by a confirmation as to whether reproduction is possible by checking the format and the like of the decrypted contents data. When reproduction is not possible, the same processing for other key data held by the contents encrypting key memory section **106** is repeated.

(**S302**) The decrypting section **108** operates to decrypt the encrypted contents data with the use of the specified key data and, by outputting such data as **AV** data, display on a display, not shown, may be made.

At this point, the encrypted contents data recorded on the copyright protection non-compliant recording medium is free from any restriction for copyright protection to enable it to be duplicated on other copyright protection non-compliant recording media. However, no encrypted contents data can be reproduced or used without key data. The key data is held by only the HDD-DVD recorder **102,** which carried out encrypting and recording of the contents data as described above. Consequently, even if duplications of the encrypted contents data should be distributed around the world, the encrypted contents data can be reproduced on nothing but the HDD-DVD recorder **102.** As a result, the copyright is substantially protected.

### (3) Move of Contents Data from the Copyright Protection Non-Compliant Recording Medium (HDD 111) to the Copyright Protection Compliant Recording Medium (DVD-RAM 112 or DVD-R 113)

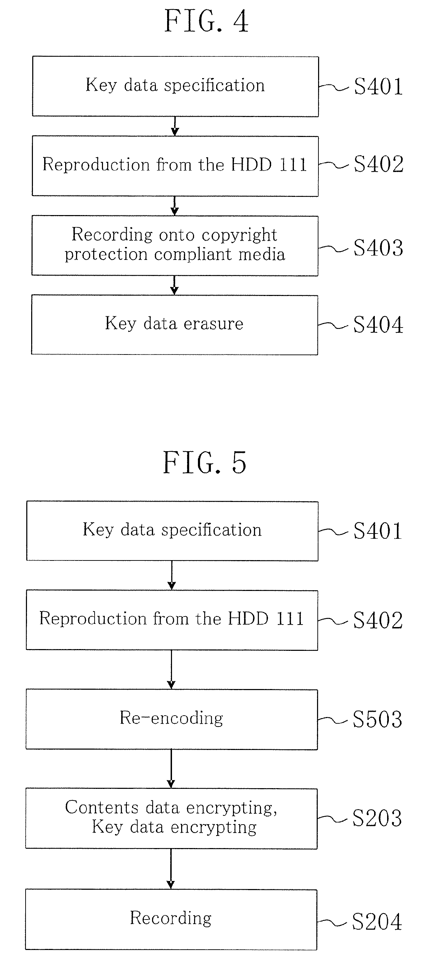

When the encrypted contents data once recorded on the HDD **111** as mentioned above is moved to, for example, the DVD-RAM **112,** then copyright is protected as follows. Referring to the flowchart in Fig. **4****,** explanation will be made.

(**S401**) First, by the same operation as in Fig. **3** (S**301**) mentioned above, the key data for decrypting the encrypted contents data is specified.

(**S402**) Next, in the same way as (S**302**) of Fig. **3****,** the encrypted contents data is decrypted. Note, however, that the decrypted contents data is not outputted as the output **AV** data but inputted to the contents encrypting section **103.** It should be mentioned that such data may be arranged to be outputted as the output **AV** data, so that, for example, dubbing is carried out while confirming images displayed on a monitor.

(**S403**) Next, recording onto the DVD-RAM **112** is performed. Specifically, first, the contents encrypting section **103** carries out encoding and/or encrypting of the contents data. This encoding follows the conditions of copyright protection, as opposed to the encrypting using the key data as explained in (1) "Recording Input **AV** Data to the Copyright Protection Non-Compliant Recording Medium". Based on the control of the copyright information control section **109,** the encoded contents data is written by the media interface section **110** on the DVD-RAM **112** by a preset system that is in accordance with the copyright protection conditions.

(**S404**) Further, the key data specified in (**S401**) mentioned above is deleted (invalidated) from the contents encrypting key memory section **106.** As a result of deleting the key data in this manner, even if a large number of duplicates of the encrypted contents data are created as described in (1), none of the encrypted contents data can be decrypted and reproduced. That is, even in the case where the recording medium on which the encrypted contents data is recorded is not actually loaded, the same can be said of deleting all encrypted contents data. Note that in cases where the recording medium with the encrypted contents recorded on is loaded or loaded later, the contents data itself may be so arranged as to be deleted.

On the other hand, recording on the DVD-RAM **112** in accordance with the conditions of copyright protection guarantees, for example, that only reproduction of the contents data from the DVD-RAM **112** is made possible and that when the contents data is copied (moved) to another copyright protection compliant recording medium, the contents data of the DVD-RAM **112** will be deleted.

Since deletion of the contents data is guaranteed as mentioned above, for example, in case of trying to record on the copyright protection compliant recording medium while such medium is not available on hand, recording may be temporarily made on the copyright protection non-compliant recording medium while re-recording may be made later on the copyright protection compliant recording medium, thereby enhancing usability on the part of the user.

### (4) Re-encode Dubbing of the Contents Data from the Copyright Protection Non-Compliant Recording Medium (HDD 111) to the Copyright Protection Non-Compliant Recording Medium (HDD 111)

When the encrypted contents data is subjected to reading and writing without decrypting, the encrypted contents data can be duplicated between the copyright protection non-compliant recording media. In addition, by decrypting it once and re-encoding (recoding), recording may be performed after performing processing such as lowering the bit rate of encoding.

Specifically, as shown in Fig. **5****,** first, the same operations as in Fig. **4** of specifying the key data (**S401**) and reproducing (decrypting) the contents data (**S402**) are performed. Thereafter, in (**S503**), re-encoding with a different bit rate is performed by the contents encrypting section **103.** The re-encoded contents data is encrypted by using the key data specified in (**S401**), that is, key data identical to the one used for encrypting the original contents data, and recorded on the same or another HDD **111** and the like, as in (**S203**) and (**S204**) of Fig. **2****.**

As mentioned above, even in cases where a plurality of versions having different bit rates and the like in regard to the same contents are to be recorded, as they are respectively encrypted and recorded by the same key data, deletion of the key data can invalidate them all at once.

It should be noted that when making duplicates within the accepted range of copyright, for example, as in the case of contents data whose bit rate has been greatly reduced such as thumb-nail, encrypting may not be carried out.

### (5) License Move (Change of Reproducible Devices).

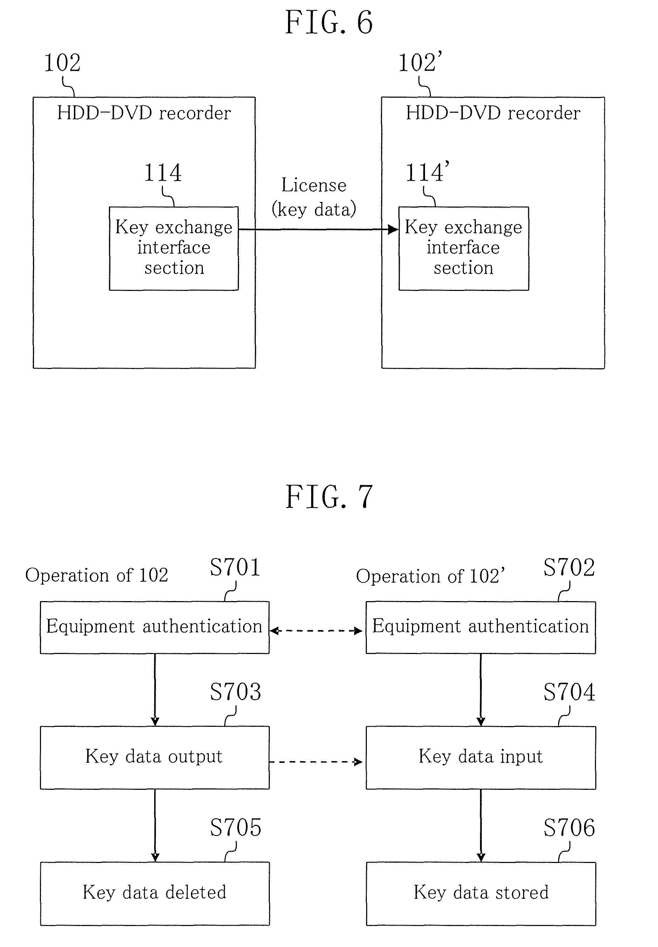

Change of devices that can reproduce the encrypted contents data recorded on the copyright protection non-compliant recording medium may be performed as follows. That is, for example, as shown in Fig. **6****,** while the key exchange interface sections **114** and **114'** in the HDD-DVD recorders **102** and **102'** are in the condition of being coupled to each other, operation shown in Fig. 7 is performed.

(**S701**) (**S702**) First, authentication of the equipment to prevent illegal operation is implemented in the HDD-DVD recorders **102** and **102'.** For this authentication, various methods currently practiced in general are applicable.

(**S703**) (**S704**) The HDD-DVD recorder **102** outputs the key data that it holds and the HDD-DVD recorder **102'** receives the key data.

(**S705**) (**S706**) Upon completion of transfer of the key data, the HDD-DVD recorder **102** deletes the key data that it holds, while the HDD-DVD recorder **102'** holds the key data received.

Through such series of operations, the encrypted contents using the moved key data cannot be reproduced by the HDD-DVD recorder **102** but can be reproduced only by the HDD-DVD recorder **102'.** In other words, it does not result in increasing the number of equipment capable of reproducing the corresponding contents, therefore, it does not give rise to circumstances whereby large numbers of illegal copies may be spread around.

As has been described hereinbefore, in the present invention, in a content data recording/reproducing device in which at least one of recording and reproducing of contents data is restricted according to the conditions of copyright protection, invalidation of the contents can be performed efficiently and safely, and hence, copyright protection is rendered easy. As a result, recording, reproducing and copying can be performed with regard to the copyright protection non-compliant recording medium, and moving from the copyright protection non-compliant recording medium to the copyright protection compliant recording medium can also be implemented. While due considerations are being given to copyright protection, it is made possible for relatively free backup, copying limited to individual use and the like to be made, thereby enhancing usability on the part of the user.

### INDUSTRIAL APPLICABILITY

The content data recording/reproducing device according to the present invention has an effect such that even when contents data is copied on a copyright protection non-compliant recording medium, the contents data is moved to a copyright protection compliant recording medium so as to make the contents data reproducible on a reproducing device not limited to a specified device. The content data recording/reproducing device is useful as a content data recording/reproducing device and the like for recording and reproducing contents data requiring copyright protection such as musical contents.

## Claims

1. A content data recording/reproducing device performing recording and reproduction of contents data comprising:
a recording section and a reading section recording or reading contents data with respect to a recording medium;
a determining section determining whether the recording medium is a copyright protection compliant recording medium in which handling of contents data complying with conditions of copyright protection is guaranteed or a copyright protection non-compliant recording medium having no such guarantee;
a reproduction control information management section which, when the contents data is to be recorded on the copyright protection non-compliant recording medium, generates and holds reproduction control information necessary for reproducing such contents data; and
a copyright protection management section which performs processing according to the conditions of copyright protection when the contents data is to be recorded on the copyright protection compliant recording medium,
wherein the reproduction control information management section is configured to delete the reproduction control information held when after the contents data is recorded on the copyright protection non-compliant recording medium, it is to be recorded on the copyright protection compliant recording medium.

2. The content data recording/reproducing device according to claim 1, wherein the reproduction control information held by the reproduction control information management section is so configured that reading from outside the device is restricted.

3. The content data recording/reproducing device according to claim 1, further comprising:
an encrypting section encrypting the contents data when the contents data is recorded on the copyright protection non-compliant recording medium; and
a decrypting section decrypting the encrypted contents data read from the copyright protection non-compliant recording medium,
wherein the reproduction control information is key data necessary for the decrypting.

4. The content data recording/reproducing device according to claim 3, wherein when the contents data is recorded on the copyright protection compliant recording medium after the contents data is recorded on the copyright protection non-compliant recording medium, it is so configured that the reading section reads the contents data recorded on the copyright protection non-compliant recording medium, the decrypting section decrypts the contents data by using the key data, and the recording section records the decrypted contents data on the copyright protection compliant recording medium.

5. The content data recording/reproducing device according to claim 1, wherein when the contents data is recorded on a second copyright protection non-compliant recording medium after the contents data is recorded on a first copyright protection non-compliant recording medium, it is so configured that the same reproduction control information generated when recording on the first copyright protection non-compliant recording medium is used for reproducible recording.

6. The content data recording/reproducing device according to claim 5, further comprising a format conversion section converting a format of contents data read from the first copyright protection non-compliant recording medium,
wherein the recording section is configured to record the contents data, whose format was converted, reproducibly on the second copyright protection non-compliant recording medium by using the reproduction control information.

7. The content data recording/reproducing device according to claim 1, wherein when the contents data recorded on the copyright protection non-compliant recording medium is made reproducible on another content data recording/reproducing device, the held reproduction control information management section outputs the reproduction control information to the other content data recording/reproducing device, while at the same time deleting or invalidating such information.

8. The content data recording/reproducing device according to claim 1, wherein when the contents data recorded on the copyright protection non-compliant recording medium by the other content data recording/reproducing device is made reproducible on the content data recording/reproducing device, the reproduction control information management section holds the reproduction control information outputted from the other content data recording/reproducing device.
